# EUROPEAN PATENT APPLICATION

(11) **EP 4 614 204 A1**
(43) Date of publication of application: **10.09.2025**
(21) Application number: 24223395.5
(22) Date of filing: 27.12.2024
(51) Int. Cl.: G02B 7/02, H04N 23/52, G03B 17/55, G02B 7/00

(54) **HEATING LENS TUBE STRUCTURE AND HEATING LENS MODULE**

(30) Priority: 07.03.2024 TW 113108404; 25.04.2024 TW 113115495
(71) Applicant: Eterge Opto-Electronics Co., Ltd., Taichung City 408 (TW); Zhong Yang Technology Co., Ltd., Taichung City 408 (TW)
(72) Inventor: HSU, Chih-Cheng, 408 Taichung City (TW); LEE, Tsu-Meng, 408 Taichung City (TW); LI, Yun-Xian, 408 Taichung City (TW)
(74) Representative: Viering, Jentschura & Partner mbB Patent- und Rechtsanwälte

(57) **Abstract**

A heating lens tube structure comprises a lens barrel, a housing and a heater. The lens barrel houses a front lens. The housing has a receiving space and an inner wall surrounding the receiving space. The receiving space accommodates the lens barrel, and an annular gap is formed between the inner wall and the lens barrel. The heater includes a heating portion disposed within the lens barrel, and a wire portion connecting the heating portion, wherein the wire portion is located within the annular gap.

## Description

### FIELD OF THE INVENTION

The present invention relates to a heating lens module used in vehicles.

### BACKGROUND OF THE INVENTION

In recent years, imaging lenses have been widely used in various applications such as vehicle dash cameras, rearview cameras, and full vehicle surround view systems. However, lenses exposed to low-temperature environments for extended periods often experience fogging, frosting, or icing, which can impair their imaging function. To address this, the industry has developed lenses with heating functions, typically comprising a lens barrel, a heater disposed within the lens barrel, and a lens group. The placement of the heating portion within the lens barrel has long been the key focus of the industry.

### SUMMARY OF THE INVENTION

In one aspect the invention is directed to a heating lens tube structure comprising a lens barrel, a housing and a heater. The lens barrel houses a front lens, and the housing has a receiving space and an inner wall surrounding the receiving space. The receiving space accommodates the lens barrel, and an annular gap is formed between the inner wall and the lens barrel. The heater includes a heating portion disposed within the lens barrel, or on the exterior of the lens barrel, and a wire portion connecting the heating portion, wherein the wire portion is located within the annular gap.

In another aspect, the lens barrel of the heating lens tube structure of the invention comprises a front cover and a hollow tube. The front cover is attached to a head of the hollow tube. A body of the hollow tube extends from the head. The front cover houses the front lens, with the front lens exposed through an opening of the front cover. The body is located within the receiving space, and the annular gap is positioned between an outer wall of the body and the inner wall of the housing.

In another aspect, the heating portion of the invention is located within the annular gap.

In another aspect, the heating portion of the invention is abutted against the outer wall of the body of the hollow tube of the lens barrel.

In another aspect, the lens barrel of the invention is made of a metal material, and the housing is made of either a metal or plastic material.

In another aspect, the heating portion of the invention is abutted against the inner wall of the housing.

In another aspect, the hollow tube of the lens barrel of the invention is made of either a metal or plastic material, and the housing and the front cover of the lens barrel are made of metal material.

In another aspect, the heating portion of the invention is abutted against the head of the hollow tube of the lens barrel.

In another aspect, the front cover of the lens barrel of the invention is made of metal material, and the housing and the hollow tube of the lens barrel are made of either a metal or plastic material.

In another aspect, a first portion of the heating portion of the invention is abutted against the outer wall of the body of the hollow tube of the lens barrel, and a second portion of the heating portion is abutted against the head of the hollow tube of the lens barrel.

In another aspect, the lens barrel or the hollow tube of the lens barrel of the invention is made of metal material, and the housing is made of either a metal or plastic material.

In another aspect, the heating portion of the invention is abutted against the front cover of the lens barrel, and the front cover is made of metal material.

In another aspect, the heating portion of the invention is located within the front cover of the lens barrel and is abutted against the first lens.

In another aspect, the heating lens tube structure of the invention further comprises another heater located within the annular gap, which includes a heating portion and a wire portion connecting the heating portion, wherein the heating portion thereof is abutted against the outer wall of the body of the hollow tube of the lens barrel or the inner wall of the housing.

According to an aspect of the present invention, a heating lens module comprises any one of the above-mentioned heating lens tube structure, an electronic component and an outer casing. The electronic component includes a circuit board and an image sensor. The outer casing accommodates the heating lens tube structure and the circuit component. The wire portion of the heater of the heating lens tube structure is electrically connected to the electronic component.

### BRIEF DESCRIPTION OF DRAWINGS

FIG. 1 is a perspective view of a heating lens tube structure in accordance with the first embodiment of the invention.
FIG. 2 is an exploded perspective view of a heating lens tube structure in accordance with the first embodiment of the invention.
FIG. 3 is schematic cross-sectional view of a heating lens tube structure in accordance with the first embodiment of the invention.
FIG. 4 is schematic cross-sectional view of a heating lens tube structure in accordance with the second embodiment of the invention.
FIG. 5 is an exploded perspective view of a heating lens tube structure in accordance with the third embodiment of the invention.
FIG. 6 is an exploded perspective view of a heating lens tube structure in accordance with the fourth embodiment of the invention.
FIG. 7 is an exploded perspective view of a heating lens tube structure in accordance with the fifth embodiment of the invention.
FIG. 8 is a perspective view of a heating lens tube structure in accordance with the fifth embodiment of the invention.
FIG. 9 is a perspective view of a heating lens module in accordance with the first embodiment of the invention.
FIG. 10 is a schematic cross-sectional view of a heating lens module in accordance with the first embodiment of the invention.
FIG. 11 is a schematic cross-sectional view of a heating lens module in accordance with the second embodiment of the invention.
FIG. 12 is a perspective view of a heating lens module in accordance with the third embodiment of the invention.
FIG. 13 is a schematic cross-sectional view of a heating lens module in accordance with the third embodiment of the invention.
FIG. 14 is an exploded perspective view of a heating lens tube structure in accordance with the sixth embodiment of the invention.
FIG. 15 is a schematic cross-sectional view of a heating lens tube structure in accordance with the sixth embodiment of the invention.
FIG. 16 is a schematic cross-sectional view of a heating lens tube structure in accordance with the seventh embodiment of the invention.

### DETAILED DESCRIPTION OF THE INVENTION

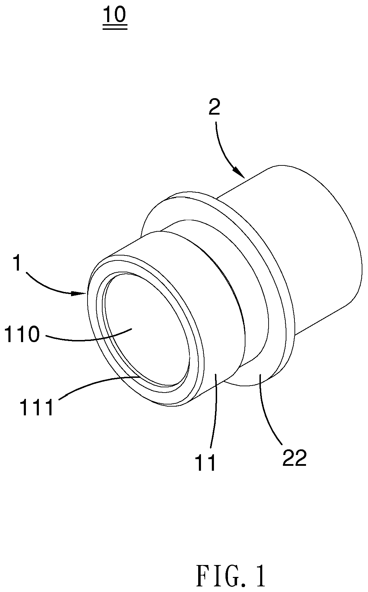

FIGS. 1 to 3 illustrate a first embodiment of a heating lens tube structure 10 of the present invention, which includes a lens barrel 1, a housing 2, and a heater 3. The interior of the lens barrel 1 houses at least one front lens 110. The housing 2 has a receiving space 21 and an inner wall 20 surrounding the receiving space 21. The receiving space 21 accommodates the lens barrel 1, and an annular gap 4 is formed between the inner wall 20 and the lens barrel 1. The heater 3 includes a heating portion 31 disposed on the lens barrel 1 and a wire portion 32 connecting the heating portion 31, with the wire portion 32 located within the annular gap 4.

The lens barrel 1 comprises a front cover 11 that houses the front lens 110 and a hollow tube 12 that houses multiple rear lenses 120. The front cover 11 is engaged with the head 121 of the hollow tube 12 by screwing or other means. The body portion 122 of the hollow tube 12 extends from the head 121 and accommodates the rear lenses 120. The front cover 11 has an opening 111 through which the front lens 110 is exposed. The front lens 110 and the rear lenses 120 are arranged along an optical axis.

In the first embodiment, the receiving space 21 of the housing 2 accommodates only the body portion 122 of the lens barrel 1, such that the head 121 of the lens barrel 1 is located outside the receiving space 21. The annular gap 4 is formed between the inner wall 20 of the housing 2 and the outer wall 123 of the body portion 122 of the lens barrel 1. Additionally, the housing 2 further includes a flange 22, although this is not mandatory.

One end of the housing 2 is bonded to the head 121 of the hollow tube 12 with a sealing adhesive 41, and the other end of the housing 2 is bonded to the body portion 122 of the hollow tube 12 with another sealing adhesive 42. The sealing adhesives 41 and 42 seal the annular gap 4, thereby converting it into a closed space. Additionally, the air within the annular gap 4 can first be evacuated to create a vacuum, and then the sealing adhesive 42 is used to seal the annular gap 4, allowing the annular gap 4 to achieve a waterproof and dustproof sealing standard.

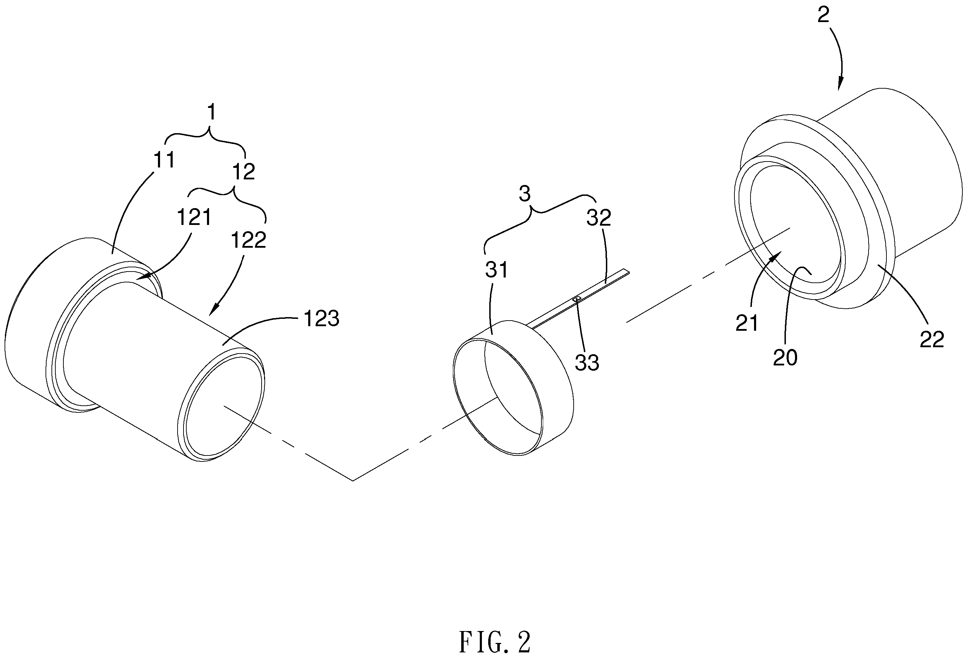

As illustrated in FIG. 2, the cylindrical heating portion 31 surrounds and abuts the outer wall 123 of the body portion 122 of the hollow tube 12, such that the heating portion 31 can heat the body portion 122. The electrical connection portion 34 of the wire portion 32 extends outward from the other end of the housing 2. The sealing adhesive 42 secures the electrical connection portion 34 to the other end of the housing 2. The hollow tube 12 of the lens barrel 1 is made of a metal material with high thermal conductivity, allowing the heat generated by the heating portion 31 to be rapidly conducted through the head 121 to the front lens 110. The housing 2 can be made of the same metal material as the hollow tube 12, but it may also be made of a plastic material. In this case, the relatively poor thermal conductivity of the plastic housing 2 can provide an insulating effect, helping to concentrate the heat within the hollow tube 12.

In the first embodiment, the wire portion 32 can further be connected to a temperature sensor 33. The temperature sensor 33 is used to detect the temperature within the annular gap 4 and can transmit signals via the wire portion 32. Preferably, the temperature sensor 33 can be a thermistor, which changes its resistance in response to temperature variations, or more preferably, an NTC thermistor, where the resistance decreases as the temperature increases.

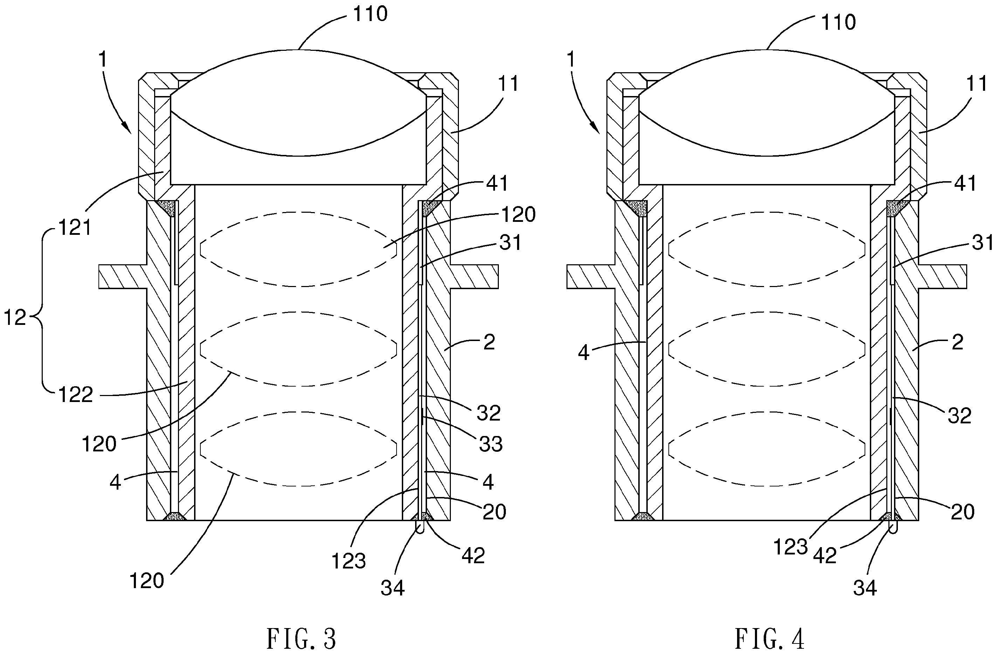

FIG. 4 illustrates a second embodiment of the heating lens tube structure 10 of the present invention, which is substantially the same as the first embodiment, with the only difference being that the heating portion 31 is abutted against the inner wall of the housing 2. As such, the heating portion 31 can heat the housing 2. In this embodiment, the housing 2 and the front cover 11 can be made of a metal material with high thermal conductivity, allowing the heat generated by the heating portion 31 to be rapidly conducted to the front lens 110. The hollow tube 12 can be made of the same metal material as the housing 2, but it may also be made of plastic. In this case, the relatively poor thermal conductivity of the plastic hollow tube 12 can provide an insulating effect, helping to concentrate the heat within the housing 2.

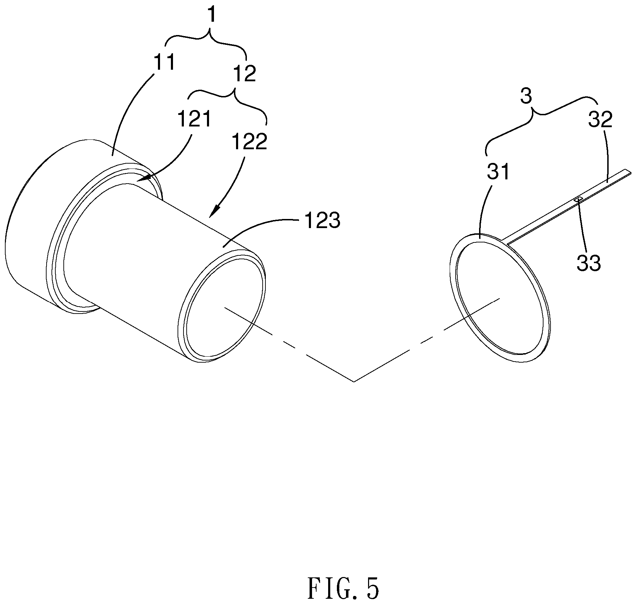

FIG. 5 illustrates a third embodiment of the heating lens tube structure 10 of the present invention, which is substantially the same as the first embodiment, with the only difference being that the annular heating portion 31 is encased around the body portion 122 of the hollow tube 12 and abuts the head 121 of the hollow tube 12. As such, the heating portion 31 can heat the head 121. In this embodiment, the front cover 11 is made of a metal material with high thermal conductivity, while the housing 2 and the hollow tube 12 of the lens barrel 1 can be made of the same metal material as the front cover 11. However, the housing 2 may also be made of plastic. In this case, the relatively poor thermal conductivity of the plastic housing 2 can provide an insulating effect, helping to concentrate the heat within the head 121.

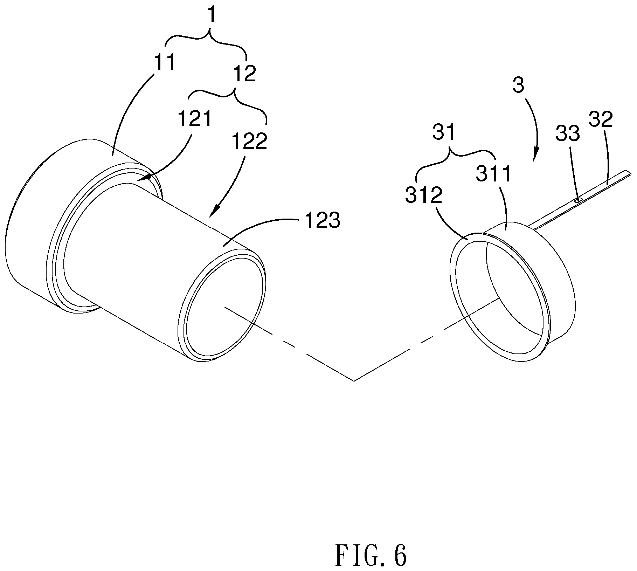

FIG. 6 illustrates a fourth embodiment of the heating lens tube structure 10 of the present invention, which is substantially the same as the first embodiment, with the only difference being that a first portion 311 of the heating portion 31 is abutted against the outer wall 123 of the body portion 122 of the hollow tube 12, and a second portion 312 of the heating portion 31 is abutted against the head 121 of the hollow tube 12. As such, the heating portion 31 can simultaneously heat both the hollow tube 12 of the lens barrel 1 and the front cover 11.

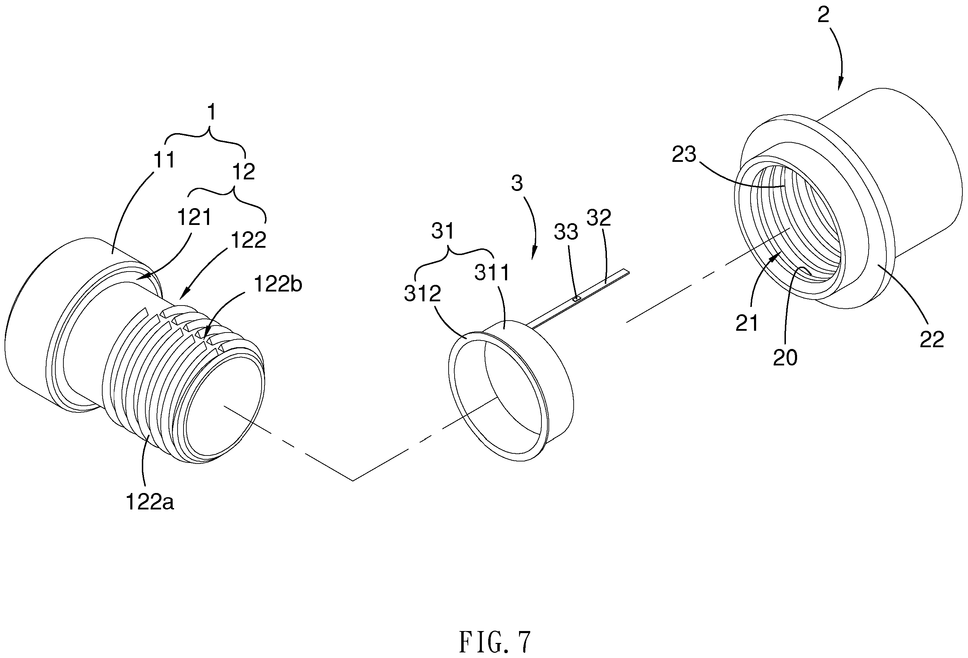

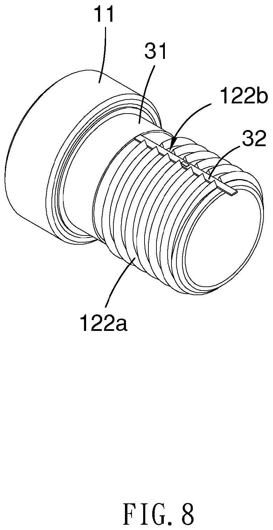

FIGS. 7 and 8 illustrate a fifth embodiment of the heating lens tube structure 10 of the present invention, which is substantially the same as the fourth embodiment, with the only difference being that the inner wall 20 of the housing 2 has an internal thread 23, and the outer wall 123 of the body portion 122 of the lens barrel 1 has an external thread 122a. As such, the lens barrel 1 can be screwed into the housing 2. Additionally, the outer wall 123 of the body portion 122 also has a slot 122b that intersects with the external thread 122a. The wire portion 32 is placed into the slot 122b. The heating portion 31 is encased around the body portion 122, positioned between the head 121 and the external thread 122a. This method of screwing the lens barrel 1 into the housing 2 can also be applied to the previous embodiments.

As shown in the above embodiments, a portion or the entire heater 3 is housed within the annular gap 4, and thus shielded and protected by the housing 2. This approach of concealing the wire portion 32 inside the lens 10 is different from traditional imaging lenses, where the wire portion of the heater is always exposed outside. This arrangement simplifies the assembly process significantly.

Furthermore, the assembly of the heating lens tube structure 10 of the present invention can be easily completed by encasing the heating portion 31 around the body portion 122 of the lens barrel 1, and then encasing the housing 2.

Therefore, the heating lens tube structure 10 of the present invention also offers the advantage of simple assembly. Additionally, by encasing the heating portion 31 around the lens barrel of an existing imaging lens without heating functionality, and further encasing the housing 2 around it, the existing imaging lens can be transformed into the heating lens tube structure 10 of the present invention with heating functionality.

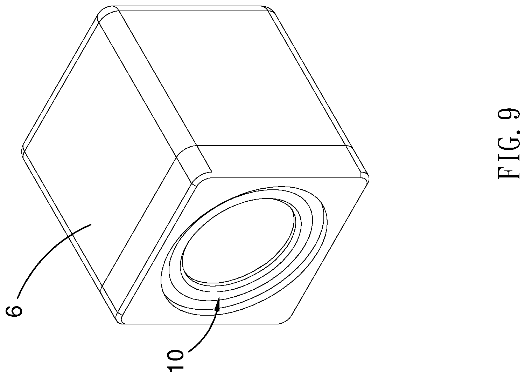

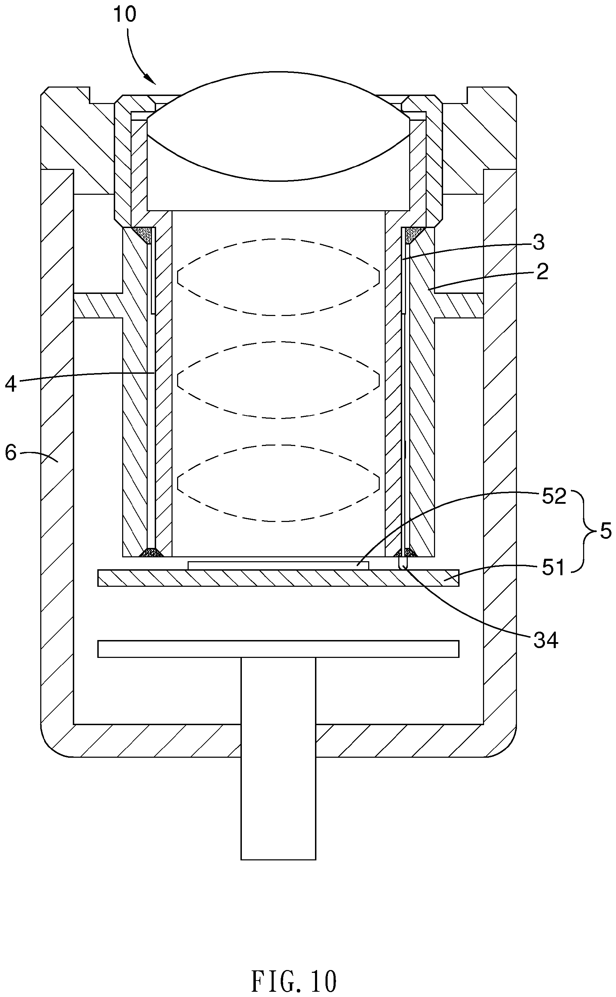

FIGS. 9 and 10 illustrate a first embodiment of a heating lens module of the present invention, which includes any of the imaging lens assemblies 10 mentioned above, an electronic component 5, and an outer casing 6. The electronic component 5 is positioned below the heating lens tube structure 10 and includes a circuit board 51 and an image sensor 52. The outer casing 6 is coupled to the heating lens tube structure 10 to secure it, and the circuit component 5 is housed within the outer casing 6. The electrical connection portion 34 of the heating lens tube structure 10 is electrically connected to the circuit board 51, such that power can be obtained from the circuit board 51 via the electrical connection portion 34 to drive the heating portion 31 and generate heat.

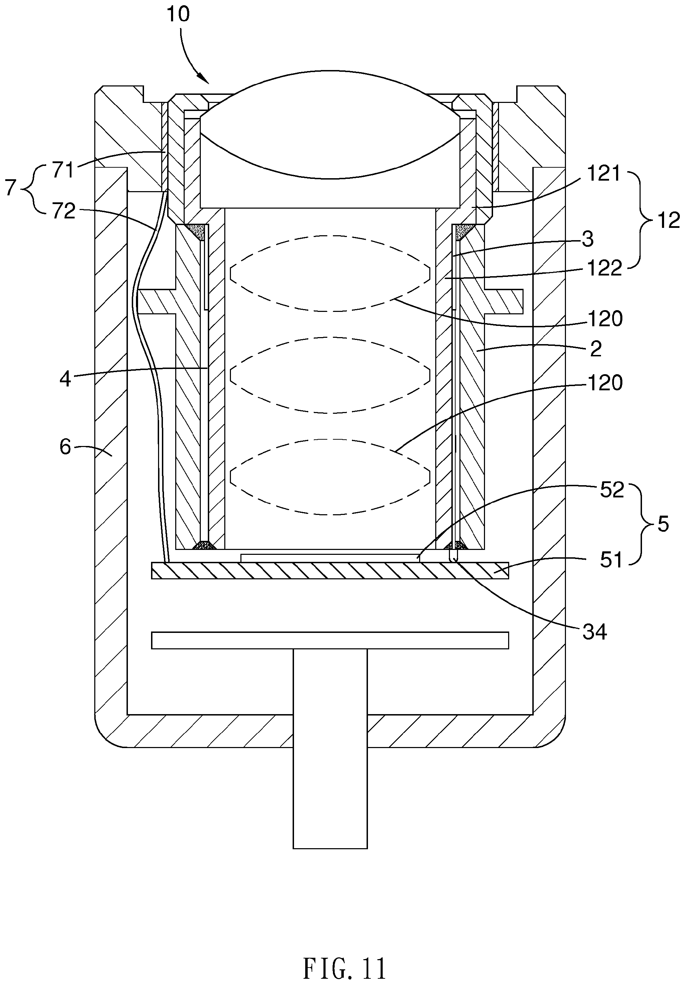

FIG. 11 illustrates a second embodiment of the heating lens module of the present invention, which is substantially the same as the first embodiment of the heating lens module, with the only difference being that this second embodiment further includes an additional heater 7. The heater 7 includes a heating portion 71 and a wire portion 72, which are substantially the same as the heating portion 31 and wire portion 32 shown in FIG. 2, and thus will not be elaborated further here. The heater 7 is housed together with the electronic component 5 within the outer casing 6. The heating portion 71 abuts the front cover 11. The wire portion 72 is electrically connected to the circuit board 51, such that power can be obtained from the circuit board 51 via the wire portion 72 to drive the heating portion 71 and generate heat.

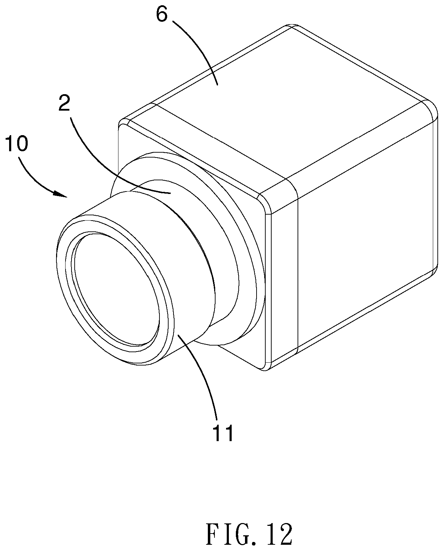

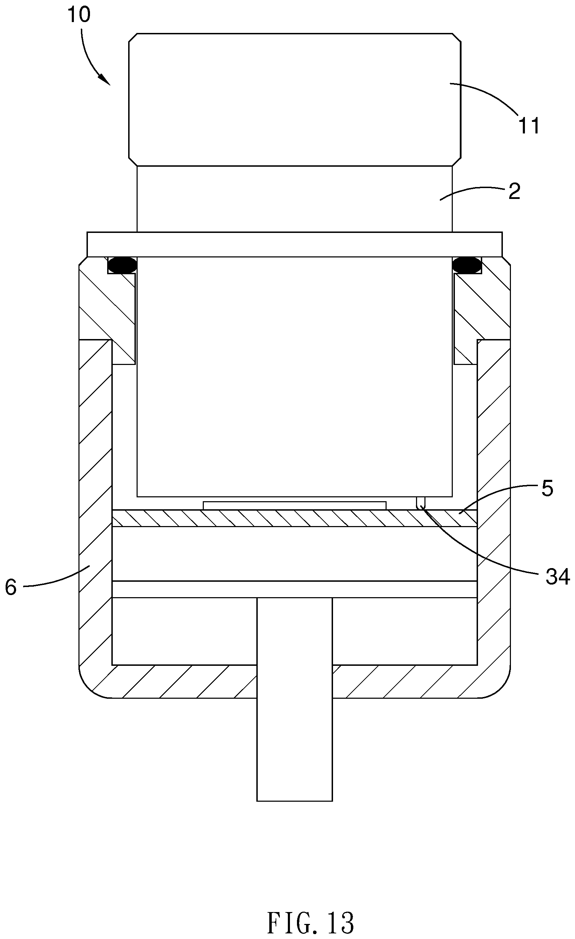

FIGS. 12 and 13 illustrate a third embodiment of the heating lens module of the present invention, which is substantially the same as the first or second embodiment of the heating lens module, with the only difference being that the front cover 11 of the heating lens tube structure 10 and a portion of the housing 2 are exposed outside the outer casing 6, while the remaining portion of the housing 2 is housed within the outer casing 6.

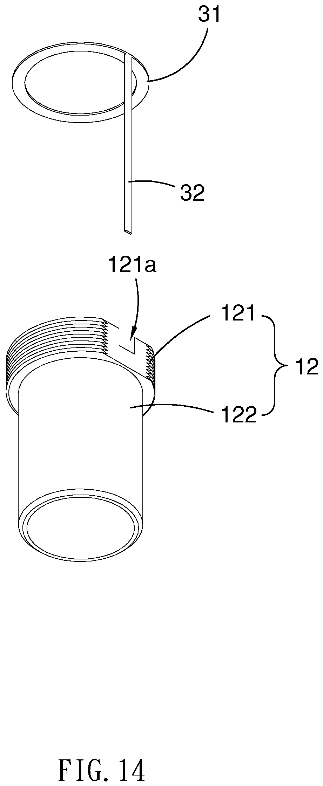

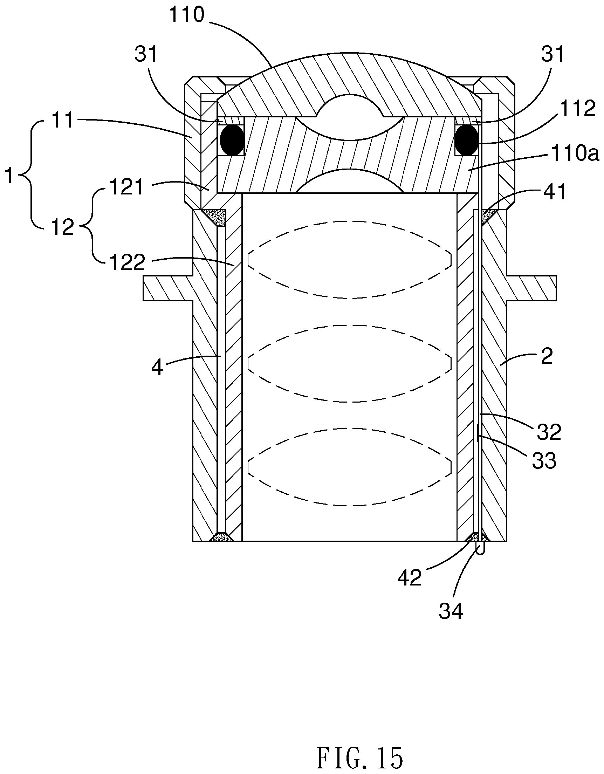

FIGS. 14 and 15 illustrate a sixth embodiment of the heating lens tube structure 10 of the present invention, which is substantially the same as the first embodiment of the heating lens tube structure 10, with the only difference being that in the sixth embodiment, the heating portion 31 is disposed inside the front cover 11 of the lens barrel 1 and abuts the front lens 110. The wire portion 32 is disposed within the annular gap 4. The wire portion 32 passes through a notch 121a of the head 121 of the hollow tube 12 before extending into the annular gap 4. Furthermore, in addition to the front lens 110, other components may be added inside the front cover 11, such as one or more lenses, one or more supporting pads, or one or more O-rings for sealing purposes. In this sixth embodiment, a lens 110a is disposed inside the front cover 11, and positioned behind the front lens 110, and an O-ring 112 is sandwiched between the lens 110a and the heating portion 31.

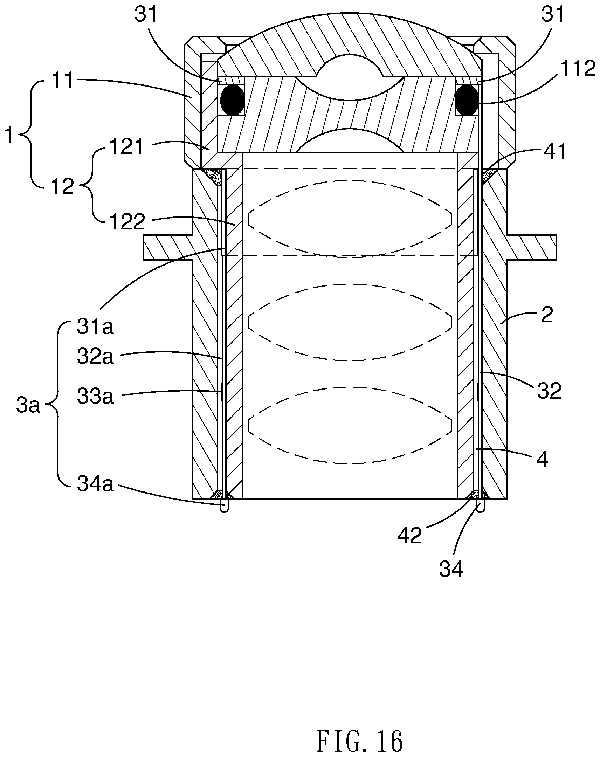

FIG. 16 illustrates a seventh embodiment of the heating lens tube structure 10 of the present invention, which is substantially the same as the sixth embodiment of the heating lens tube structure 10, with the only difference being the addition of an extra heater 3a. This heater 3a can be selected from any of the heaters 3 shown in FIGS. 2, 5, and 6. The heating portion 31a, wire portion 32a, temperature sensor 33a, and electrical connection portion 34a of the heater 3a correspond exactly to the heating portion 31, wire portion 32, temperature sensor 33, and electrical connection portion 34 described above, and will not be elaborated further here.

## Claims

1. A heating lens tube structure (10), comprising:
a lens barrel (1), which houses a front lens (110);
a housing (2), having a receiving space (21) and an inner wall (20) surrounding the receiving space (21), wherein the receiving space (21) accommodates the lens barrel (1), and an annular gap (4) is formed between the inner wall (20) and the lens barrel (1);
a heater (3, 3a), including a heating portion (31, 31a) disposed within the lens barrel (1), or on the exterior of the lens barrel (1), and a wire portion (32) connecting the heating portion (31, 31a), wherein the wire portion (32) is located within the annular gap (4).

2. The heating lens tube structure (10) as recited in claim 1, wherein the lens barrel (1) comprises a front cover (11) and a hollow tube (12), the front cover (11) being attached to a head (121) of the hollow tube (12), a body (122) of the hollow tube (12) extending from the head (121), the front cover (11) housing the front lens (110), with the front lens (110) exposed through an opening (111) of the front cover (11), the body (122) being located within the receiving space (21), and the annular gap (4) being positioned between an outer wall (123) of the body (122) and the inner wall (20) of the housing (2).

3. The heating lens tube structure (10) as recited in claim 2, wherein the heating portion (31, 31a) is located within the annular gap (4).

4. The heating lens tube structure (10) as recited in claim 3, wherein the heating portion (31, 31a) is abutted against the outer wall (123) of the body (122) of the hollow tube (12) of the lens barrel (1).

5. The heating lens tube structure (10) as recited in claim 4, wherein the lens barrel (1) is made of a metal material, and the housing (2) is made of either a metal or plastic material.

6. The heating lens tube structure (10) as recited in claim 3, wherein the heating portion (31, 31a) is abutted against the inner wall (20) of the housing (2).

7. The heating lens tube structure (10) as recited in claim 6, wherein the hollow tube (12) of the lens barrel (1) is made of either a metal or plastic material, and the housing (2) and the front cover (11) of the lens barrel (1) are made of metal material.

8. The heating lens tube structure (10) as recited in claim 3, wherein the heating portion (31, 31a) is abutted against the head (121) of the hollow tube (12) of the lens barrel (1).

9. The heating lens tube structure (10) as recited in claim 8, wherein the front cover (11) of the lens barrel (1) is made of metal material, and the housing (2) and the hollow tube (12) of the lens barrel (1) are made of either a metal or plastic material.

10. The heating lens tube structure (10) as recited in claim 3, wherein a first portion (311) of the heating portion (31, 31a) is abutted against the outer wall (123) of the body (122) of the hollow tube (12) of the lens barrel (1), and a second portion (312) of the heating portion (31, 31a) is abutted against the head (121) of the hollow tube (12) of the lens barrel (1).

11. The heating lens tube structure (10) as recited in claim 10, wherein the lens barrel (1) or the hollow tube (12) of the lens barrel (1) is made of metal material, and the housing (2) is made of either a metal or plastic material.

12. The heating lens tube structure (10) as recited in claim 3, wherein the heating portion (31, 31a) is abutted against the front cover (11) of the lens barrel (1), and the front cover (11) is made of metal material.

13. The heating lens tube structure (10) as recited in claim 2, wherein the heating portion (31, 31a) is located within the front cover (11) of the lens barrel (1) and is abutted against the front lens (110).

14. The heating lens tube structure (10) as recited in claim 13, further comprising another heater (3, 3a) located within the annular gap (4), which includes a heating portion (31, 31a) and a wire portion (72) connecting the heating portion (31, 31a), wherein the heating portion (31, 31a) thereof is abutted against the outer wall (123) of the body (122) of the hollow tube (12) of the lens barrel (1) or the inner wall (20) of the housing (2).

15. A heating lens module, comprising:
a heating lens tube structure (10) as recited in any one of claims 1 to 14;
an electronic component (5), including a circuit board (51) and an image sensor (52); and
an outer casing (6), accommodating the heating lens tube structure (10) and the electronic component (5); wherein the wire portion (72) of the heater (3, 3a) of the heating lens tube structure (10) is electrically connected to the electronic component (5).
